# EUROPÄISCHE PATENTANMELDUNG

(11) **EP 4 640 598 A1**
(43) Veröffentlichungstag der Anmeldung: **29.10.2025**
(21) Anmeldenummer: 24172173.7
(22) Anmeldetag: 24.04.2024
(51) Int. Cl.: B65G 47/86, F16H 25/20, B66F 3/08

(54) **HÖHENVERSTELLVORRICHTUNG, ANSTEUERUNGSVORRICHTUNG SOWIE TRANSPORTVORRICHTUNG**

(71) Anmelder: Tyrolon GmbH, 6395 Hochfilzen (AT)
(72) Erfinder: Schulnig, Elmar, 6392 St. Jakob i.H. (AT); Schulnig, Ludwig, 6392 St. Jakob i.H. (AT)
(74) Vertreter: Meissner Bolte Partnerschaft mbB

(57) **Zusammenfassung**

Transportvorrichtung (60) mit einer Ansteuerungsvorrichtung (40) zum Steuern von Betätigungselementen (64) von einer Greifeinrichtung der Transportvorrichtung (60) zum Transportieren von flaschenartigen Behältern und mit einer Höhenverstellvorrichtung (10) zum Höhenverstellen der Transportvorrichtung (60) zum Greifen, Halten, Führen und Transportieren von insbesondere flaschenartigen Behältern, wobei die Höhenverstellvorrichtung das Folgende aufweist einen Linearantrieb (12), wobei der Linearantrieb (12) ausgelegt ist, die Transportvorrichtung (60) in einer linearen Bewegung entlang einer Höhenachse der Transportvorrichtung (60) zu verstellen, und wobei der Linearantrieb (12) ausgelegt ist, durch eine Trägerplatte (66) der Transportvorrichtung (60) durchführbar und verbindbar zu sein, und ein Antriebselement (14), wobei das Antriebselement (14) mit dem Linearantrieb (12) wirkverbunden ist.

## Beschreibung

Die vorliegende Erfindung betrifft eine Höhenverstellvorrichtung zum Höhenverstellen einer Greif- und Transportvorrichtung zum Greifen, Halten, Führen und Transportieren von insbesondere flaschenartigen Behältern, eine Ansteuerungsvorrichtung zum Steuern von Betätigungselementen von Greifarmen einer Greifeinrichtung einer Transportvorrichtung zum Transportieren von flaschenartigen Behältern sowie eine Transportvorrichtung zum Transportieren von Behältern mit mehreren Greifeinrichtungen zum Greifen, Halten und Führen von flaschenartigen Behältern.

Eine derartige Transportvorrichtung zum Greifen, Halten, Führen und/oder Transportieren von insbesondere flaschenartigen Behältern ist bereits aus dem Stand der Technik, insbesondere unter der Bezeichnung "Klammerstern", bekannt und wird bei der fließbandmäßigen Verarbeitung und Handhabung von Behältern eingesetzt. Die Transportvorrichtung weist in der Regel eine Trägerplatte als Basis auf, an der bzw. auf der einzelne Greifvorrichtungen über den Umfang verteilt angebracht sind. In einem automatischen Reinigungs-, Abfüll- oder Etikettiervorgang werden in der Regel mehrere solcher Transportvorrichtungen eingesetzt.

Unter dem Begriff "Behälter" sind im Zusammenhang mit der vorliegenden Erfindung insbesondere, aber nicht ausschließlich, Behälter mit einem im wesentlichen kreisförmigen Querschnitt zu verstehen, z.B. Flaschen oder Dosen oder Gläser, die jeweils in üblicher Weise aus Glas, Metall oder Kunststoff bestehen können. Unter dem Begriff "im Wesentlichen kreisförmig" sind im Zusammenhang mit der vorliegenden Erfindung nicht ausschließlich im geometrischen Sinne rund geformte Behälter zu verstehen, sondern beispielsweise auch ovale, regelmäßig mehreckige usw., die dann insbesondere einen im Wesentlichen kreisförmigen, aber beispielsweise auch ovalen oder mehreckigen Querschnitt aufweisen.

Eine oder mehrere Transportvorrichtungen werden u.a. in einem Prozessablauf zum Reinigen und Befüllen von Behältern verwendet, bei dem die Transportvorrichtungen örtlich so positioniert und eingestellt sind, dass sie die Behälter von Förderbändern aufnehmen und zur nächsten Station, z.B. einer Füll- oder Reinigungsanlage und von dort z.B. zu einer Etikettierstation transportieren. Zu diesem Zweck weist eine Transportvorrichtung Greifeinrichtungen zum Erfassen, Halten und/oder Führen von insbesondere flaschenartigen Behältern auf, die auf einer mit einer Antriebswelle drehbaren Trägerplatte angeordnet und befestigt sind. Eine solche Greifvorrichtung oder Greifeinheit für ein Behältertransportsystem weist mindestens ein Greifarmpaar mit zwei Greifarmen auf und kann zwischen einer Greifstellung und einer Öffnungsstellung wechseln. Zum Transport eines Behälters greifen die Greifarme in der Regel unter den Halsring oder bei Flaschen um den Bauch des Behälters. Dabei dient ein Steuernocken als Öffnungsmittel und eine Schraubenfeder oder ein Magnetpaar als Schließmittel der Greifeinrichtung. Der Steuernocken einer Greifeinrichtung wird über eine Schaltklaue als Betätigungsmittel angesteuert, mit deren Hilfe die Greifeinrichtung geöffnet und geschlossen werden kann.

Damit die Greifeinrichtung die zu transportierenden Behälter stabil greifen und führen kann, muss die Greifeinrichtung, insbesondere die Trägerplatte der Transportvorrichtung, auf der die Greifeinrichtungen montiert ist/sind, auf eine bestimmte Höhe und auf die Größe und Form der Behälter abgestimmt bzw. eingestellt werden. Dies bedeutet, dass für den Einbau der Greifeinrichtung in eine bestehende oder neue Reinigungs- und/oder Abfüllanlage für Behälter geplant und berechnet werden muss, in welcher Höhe die Greifeinrichtung angeordnet werden muss. Dazu werden die Transportvorrichtungen ggf. individuell und für den Einzelfall ausgerichtet, konstruiert und/oder gefertigt, um eine bestimmte Höhe der Greifeinrichtungen einzustellen. Dazu muss unter anderem die Länge der Antriebswelle bei der Konstruktion und Fertigung festgelegt werden. Bei der Montage der Transportvorrichtung wird daher in der Regel die Trägerplatte mit den Greifeinrichtungen auf einer bestimmten Höhe der Antriebswelle der Transportvorrichtung starr befestigt. Gleiches gilt in Bezug auf eine bestimmte Höhe für eine Antriebseinrichtung, die über Antriebselemente die Greifeinrichtungen, insbesondere deren Öffnungsmittel, betätigen und damit öffnen und schließen kann.

Zusätzlich muss die Greifeinrichtung die zu transportierenden Behälter stabil greifen und führen können, hierfür muss die Greifeinrichtung in einer bestimmten Weise angesteuert werden. Das bedeutet, dass die Greifeinrichtungen der Transportvorrichtung stetig und immer wieder an einem gleichen und vorbestimmten Ort angesteuert werden müssen, um von einer Greifstellung in eine Öffnungsstellung oder umgekehrt wechseln zu können. Dies wird mittels einer Ansteuerungsvorrichtung erreicht, die normalerweise auf der Transportvorrichtung starr befestigt ist. Da die Ansteuerung der Greifeinrichtungen stets an einer gleichen und vorbestimmten Position erfolgen muss, bei einem Eingriff der Ansteuerungsvorrichtung mit der Greifeinrichtung und somit bei deren Betätigung allerdings eine nicht zu unterschätzende Kraft auf die Ansteuerungsvorrichtung wirkt, ist die Ansteuerungsvorrichtung normalerweise stabil und fest mit der Transportvorrichtung verbunden.

Die starre und komplexe Montage der beispielsweise aus der DE102014107538 bekannten Ansteuerungsvorrichtung bedingt eine aufwendige Installation und somit längere Ausfall- bzw. Wartezeiten. Daher bringt der Betrieb einer aus dem Stand der Technik bekannten Ansteuerungsvorrichtung einen erhöhten Wartungs- und Reinigungsaufwand mit sich. Ebenso ist die Installation einer Transportvorrichtung auf Grund Ihres hohen Gewichts und Ihrer komplizierten Struktur schwieriger und zeitaufwendiger. Diese Nachteile führen bei einer Installation als auch bei einer Wartung, wie z.B. einer Justierung oder einer Reinigung, der Transportvorrichtung und deren Ansteuerungsvorrichtung zu längeren Stillstandszeiten der Maschine, des Betriebs und der Produktion und schließlich zu finanziellen Einbußen.

Es ist daher die Aufgabe der vorliegenden Erfindung, eine Höhenverstellvorrichtung für eine Transportvorrichtung der eingangs genannten Art insbesondere dahingehend zu konzipieren, dass die Transportvorrichtung einfach und effizient in der Höhe verstellt werden kann. Ferner ist es eine Aufgabe der vorliegenden Erfindung, eine Ansteuerungsvorrichtung für eine Transportvorrichtung der eingangs genannten Art in vorteilhafter Weise weiterzubilden, insbesondere dahingehend, dass eine leichtere Installation und Wartung sowie Anpassung der Ansteuerungsvorrichtung ermöglicht und der Aufbau der Transportvorrichtung vereinfacht werden. Ferner ist es eine Aufgabe der vorliegenden Erfindung eine Transportvorrichtung zur Verfügung zu stellen, deren Höhe abhängig von den mit der Transportvorrichtung mitwirkenden Anlagen eines Behältertransportsystems und von der Form und Größe der Behälter schnell und einfach angepasst werden kann.

Diese Aufgabe wird erfindungsgemäß durch eine Höhenverstellvorrichtung mit den Merkmalen des Anspruch 1, eine Ansteuerungsvorrichtung mit den Merkmalen des Anspruchs 9 sowie mit einer Transportvorrichtung mit den Merkmalen des Anspruchs 12 gelöst.

In einem ersten Aspekt der Erfindung ist eine Höhenverstellvorrichtung zum Höhenverstellen einer Greif- und Transportvorrichtung zum Greifen, Halten, Führen und Transportieren von insbesondere flaschenartigen Behältern vorgesehen. Die Höhenverstellvorrichtung weist zur Höhenverstellung einen Linearantrieb und ein Antriebselement auf. Dabei ist der Linearantrieb ausgelegt, die Greif- und Transportvorrichtung in einer linearen Bewegung entlang einer Höhenachse der Transportvorrichtung zu verstellen. Zusätzlich ist der Linearantrieb ausgelegt, durch eine Trägerplatte der Transportvorrichtung durchführbar und und mit dieser verbindbar zu sein. Das Antriebselement ist mit dem Linearantrieb wirkverbunden.

Vorliegend wird unter einem Linearantrieb eine mechanische Vorrichtung zum Erzeugen und Steuern einer linearen Bewegung bzw. einer geradlinigen Bewegung entlang einer Achse verstanden.

Ein Antriebselement dient dazu eine Bewegung zu erzeugen und zu übertragen. Es erzeugt bzw. überträgt die Bewegung auf den Linearantrieb, so dass die zu bewegenden Komponente, also die Greif- und Transportvorrichtung, in einer geradlinigen Bewegung in ihrer Höhe verstellt werden kann.

Unter einer durch eine Trägerplatte durchführbare und mit der Trägerplatte verbindbaren Höhenverstellvorrichtung wird vorliegend verstanden, dass diese durch eine Öffnung der Trägerplatte, welche vorteilhafterweise mittig an der Trägerplatte vorgesehen ist, durchgeführt werden kann oder aufgenommen werden kann. Die Trägerplatte hat eine vorher festgelegte Position an der Höhenverstellvorrichtung, an dieser Position werden die Höhenverstellvorrichtung und die Trägerplatte später miteinander verbunden, sodass im späteren Einbauzustand in der Transportvorrichtung die Trägerplatte durch die Höhenverstellvorrichtung verstellt werden kann.

Der entscheidende Vorteil von Linearantrieben ist ihre Fähigkeit zur präzisen Positionierung, sodass die Transportvorrichtung mittels der Höhenverstellvorrichtung exakt positioniert werden kann. Um eine Vielzahl von Transportvorrichtungen in einer Fertigungsstraße aufeinander abstimmen zu können, ist es besonders einfach und effizient, diese über ihre jeweilige Höhenverstellvorrichtung millimetergenau aufeinander abzustimmen.

Ein weiterer Vorteil ist die Platzersparnis, die Linearantriebe bieten. Da sie keine zusätzliche Mechanik für die Umwandlung von rotierender Bewegung in eine lineare Bewegung benötigen, können sie in Anwendungen mit begrenztem Raumangebot effizient eingesetzt werden. Aufgrund der einfachen Mechanik bzw. ihrer einfachen Konstruktion gibt es einen geringen Verschleiß, der gleichzeitig mit weniger Wartung einhergeht.

Bei der Höhenverstellvorrichtung ist es vorteilhaft, wenn der Linearantrieb eine Spindel aufweist, wobei die Spindel für einen Kugelgewindetrieb oder einen Rollengewindetrieb oder ein Planetenrollengewindetrieb ausgelegt ist.

Ein Kugelgewindetrieb umfasst eine Gewindespindel und eine Mutter, wobei die Mutter mit einer Reihe von Kugeln oder Kugellagern versehen ist, die zwischen der Gewindespindel und der Mutter rollen. Die Kugeln dienen dazu, die Reibung zwischen der Gewindespindel und der Mutter zu verringern und die Effizienz der Umwandlung der Drehbewegung in eine lineare Bewegung zu erhöhen. Dies ermöglicht eine reibungsarme und präzise Bewegung über lange Strecken.

Im Gegensatz zu den Kugeln des Kugelgewindetriebs befinden sich beim Rollengewindetrieb Rollen zwischen der Gewindespindel und der Mutter. Durch die Rollen wird die Reibung verringert. Durch die Verwendung von Rollen kann die Tragfähigkeit und Steifigkeit erhöht werden.

Eine Sonderform des Rollengewindetriebs ist der Planetenrollengewindetrieb. Die Rollen des Planetenrollengewindetriebs sind kegel- oder zylinderförmig und so angeordnet, dass sie sich wie Planeten um die Gewindespindel drehen. Der Aufbau ähnelt dem eines Planetengetriebes. Sie sind besonders vorteilhaft für Anwendungen, bei denen eine hohe Tragfähigkeit und eine gleichmäßige Lastverteilung erforderlich sind.

Des Weiteren ist es bei der Höhenverstellvorrichtung vorteilhaft, wenn der Linearantrieb ein Schubrohr aufweist, wobei das Schubrohr und die Spindel zur Ausführung der Bewegung ineinandergreifen.

Damit das Schubrohr in die Spindel eingreifen kann, wird die Spindel vom Schubrohr umschlossen und weist eine zur Spindel komplementäre Kontur auf. Das Schubrohr dient somit als Führung für die Spindel, was einerseits eine gleichmäßige Bewegung über die gesamte Länge ermöglicht und andererseits die Steifigkeit und Stabilität der Spindel, insbesondere bei langen oder hoch belasteten Spindeln, verbessert. Gleichzeitig schützt das Schubrohr die Gewindespindel vor äußeren Einflüssen wie Schmutz, Staub oder Fremdkörpern, die die Funktion der Spindel beeinträchtigen könnten. Es trägt auch dazu bei, die Spindel vor Beschädigungen durch Stöße oder ähnliche Belastungen zu schützen, was die Lebensdauer der Höhenverstellvorrichtung verlängern kann.

Dabei kann die Spindel des Linearantriebs der Höhenverstellvorrichtung eine drehende oder nicht drehende Spindel sein.

Bei einem Linearantrieb mit drehender Spindel dreht sich die Gewindespindel selbst, um die lineare Bewegung zu erzeugen. Dies geschieht durch die Anwendung eines Drehmoments auf die Spindel mittels des Antriebselementes. Die drehende Spindel ermöglicht eine rotatorische Bewegung bei gleichzeitiger linearer Bewegung.

Im Gegensatz dazu bleibt bei einem Linearantrieb mit nicht drehender Spindel die Spindel während des Betriebs stationär und dreht sich nicht. Stattdessen bewegt sich die Mutter entlang der Spindel, um die lineare Bewegung zu erzeugen. Stehende Spindeln eignen sich für Anwendungen, die eine reine Linearbewegung erfordern.

Um die Flexibilität der Einsatzort bzw. der Anwendungen zu ermöglichen kann das Antriebselement der Höhenverstellvorrichtung eine Handkurbel oder ein Elektromotor sein.

Die Wahl, ob elektrische oder manuell die Höhe eingestellt werden kann, kann dabei in Abhängigkeit der Kosten, aber auch des Einsatzortes und der gewünschten Genauigkeit getroffen werden.

Dabei ermöglicht ein Elektromotor eine präzisere Einstellung der Höhe. Gleichzeitig kann eine Kontrolleinheit vorgesehen sein, die den Elektromotor steuert und/oder regelt. Dabei ist auch denkbar, dass die Kontrolleinheit direkt über eine, insbesondere drahtlose, Fernsteuerung, beispielsweise über einen PC oder ein Smartphone eingestellt wird. Insbesondere kann die Kontrolleinheit die Höhenverstellvorrichtung in Abhängigkeit eingetragener, eingestellter oder hinterlegter Daten steuern und/oder regeln, so dass über einen PC oder eine andere Eingabeeinheit nur der zu befüllende Behälter eingestellt wird, und die Kontrolleinheit die Höhenverstellvorrichtung präzise auf die hinterlegte Höhe für den Behälter einstellt oder sogar mehrere Höhenverstellvorrichtungen bzw. Transportvorrichtungen in Abhängigkeit von den zu befüllenden Behältern zueinander in ihrer Höhe verstellt, um einen reibungslosen Transport der Behälter zu gewährleisten.

Ferner ist es möglich, dass der Elektromotor einen Schalter aufweist, der sowohl manuell als auch digital geschalten werden kann. Dies stellt sicher, dass der Elektromotor beispielsweise bei einer Wartung der gesamten Anlage ausgeschalten und eingeschalten werden kann. Dabei kann die Kontrolleinheit den Schalter steuern und/oder regeln.

Besonders vorteilhaft ist es, wenn der Elektromotor einen Akkumulator aufweist. Dies ermöglicht einen weitestgehend kabellosen Betrieb des Höhenverstellvorrichtung. Um einen durchgängigen und sicheren Betrieb zu gewährleisten, kann der Akkumulator austauschbar an der Höhenverstellvorrichtung angeordnet sein. Denkbar ist auch, dass der Akkumulator induktiv aufladbar ist. Ferner kann der Akkumulator ausgebildet sein, mit der Kontrolleinheit Daten, wie beispielsweise den Ladestatus, auszutauschen. Dies erhöht die Sicherheit des Betriebs der Höhenverstellvorrichtung.

Hier kann es weiterhin von Vorteil sein, wenn auf die Daten des Elektromotors und/oder auf die Daten des Akkumulators mittels einer App über ein Smartphone oder ähnliches zugegriffen werden kann. Die App kann dabei mit der Kontrolleinheit in datenverbunden sein. Dabei können die Daten zur Höhenverstellung der Höhenverstellvorrichtung über die App geändert oder hinzugefügt werden.

Ferner kann bei der Höhenverstellvorrichtung eine Aufnahme für das Antriebselement vorgesehen sein. Dabei ist die Aufnahme an einem oberen Ende des Linearantriebs vorgesehen. Alternativ kann die Aufnahme auch an einem unteren Ende des Linearantriebs, insbesondere des Schubrohrs des Linearantriebs, angeordnet sein.

Dies lässt eine kompakte und platzsparende Bauweise der Höhenverstellvorrichtung zu und schützt gleichzeitig das Antriebselement vor Umwelteinflüssen.

Zum Schutz des Linearantriebs und zur Stabilisierung der gesamten Höhenverstellvorrichtung kann ein Führungsgehäuse vorgesehen sein. Das Führungsgehäuse umgibt den Linearantrieb zumindest abschnittsweise. Ferner sind das Führungsgehäuse und der Linearantrieb, insbesondere linearverstellbar, miteinander verbunden, das heißt, dass das Führungsgehäuse durch die erzeugte Bewegung des Linearantriebs mit linear verstellt wird.

Besonders vorteilhaft ist es bei der Höhenverstellvorrichtung, wenn der Linearantrieb eine Ansteuerungsvorrichtung-Aufnahme für eine Ansteuerungsvorrichtung zum Steuern von Betätigungselementen von einer Greifeinrichtung einer Transportvorrichtung zum Transportieren von flaschenartigen Behältern aufweist.

Die Ansteuerungsvorrichtung-Aufnahme kann dabei auch an dem Führungsgehäuse, welches den Linearantrieb umgibt, angeordnet sein. Ferner kann es sich um eine Ansteuerungsvorrichtung gemäß des untenstehenden zweiten Aspektes der Erfindung handeln.

Ein zweiter Aspekt der Erfindung ist eine Ansteuerungsvorrichtung zum Steuern von Betätigungselementen von einer Greifeinrichtung einer Transportvorrichtung zum Transportieren von flaschenartigen Behältern, aufweisend einen Befestigungsabschnitt, wobei der Befestigungsabschnitt ausgelegt ist, an einer Höhenverstellvorrichtung, insbesondere einer Höhenverstellvorrichtung gemäß dem ersten Aspekt der Erfindung, befestigt zu werden. Dabei ist der Befestigungsabschnitt ausgelegt, mit einer Trägerplatte der Transportvorrichtung verbindbar zu sein. Zusätzlich ist mindestens ein Ansteuerelement vorgesehen. Dabei ist das Ansteuerelement mittels eines Spannmittels fest und verdrehsicher an dem Befestigungsabschnitt positionierbar.

Besonders vorteilhaft ist es, wenn die Höhenverstellvorrichtung durch den Befestigungsabschnitt der Ansteuerungsvorrichtung durchführbar und mit dieser verbindbar ist. Hierfür kann der Befestigungsabschnitt in vorteilhafterweise zylindrisch bzw. rohrförmig oder als Flansch ausgebildet sein.

Die erfindungsgemäße Ansteuerungsvorrichtung bietet zunächst den Vorteil, dass eine einfachere Installation der Ansteuerungsvorrichtung auf der Transportvorrichtung ermöglicht wird. Dies liegt zum einen an der für ein technisches Personal besseren Zugänglichkeit zur Oberseite der Transportvorrichtung. Dadurch können die Ansteuerungsvorrichtung und deren Ansteuerungselemente leichter justiert werden, um die Positionen zum Greifen und Freigeben der Behälter durch die Greifeinrichtungen festzulegen.

Die Ansteuerelemente weisen einen Einlaufbereich, einen Ansteuerbereich und einen Auslaufbereich auf. Dabei ist der Ansteuerbereich zwischen dem Einlaufbereich und dem Auslaufbereich angeordnet und weist die maximale Dicke des Ansteuerelementes. Der Einlaufbereich und der Auslaufbereich sind im Wesentlichen als Schräge ausgebildet, so dass das Ansteuerelement im wesentlich trapezförmig ist. Im Ansteuervorgang kommen die Betätigungselemente der Greifeinrichtung der Transportvorrichtung zunächst mit dem Einlaufbereich in Kontakt, welcher zunächst zu einer Impulsaufnahme führt, in dem Ansteuerbereich wirkt dann so viel Kraft auf die Betätigungseinrichtungen, dass die Greifeinrichtungen geöffnet werden. Im Auslaufbereich wird die auf die Betätigungseinrichtung wirkende Kraft wieder geringer und die Greifeinrichtung schließt sich wieder.

Durch die Spannmittel zur Positionierung des Ansteuerelementes wird eine schnelle und einfache Einstellung oder Verstellung der optimalen Position zum Ansteuern ermöglicht. Dies ermöglicht das Ausgleichen kleiner Toleranzen oder Verschleißerscheinungen bei den Betätigungselementen oder Ansteuerelementen. Gleichzeitig ermöglichen die Spannmittel ein einfaches Austauschen der Ansteuerelemente im Falle eines zu großen Verschleiß.

Besonders vorteilhaft bei der Ansteuerungsvorrichtung ist es, wenn der Befestigungsabschnitt eine segmentierte Umfangsnut aufweist und, wenn das mindestens ein Ansteuerelement einen Eingriffsabschnitt aufweist. Dabei ist es weiterhin vorteilhaft, wenn der Eingriffsabschnitt der komplementären Form der Umfangsnut entspricht und in der segmentierten Umfangsnut in deren Umfangsrichtung variabel positionierbar ist.

Als segmentierte Umfangsnut wird vorliegend verstanden, dass der Befestigungsabschnitt einzelne auf dem Umfang verteilte Segmenten umfasst, wobei die einzelnen Segmente eine Nut aufweisen. Die Umfangsnut kann insbesondere in Form einer T-Nut ausgebildet sein.

Der Eingriffsabschnitt des Ansteuerelementes ist komplementär zu der Umfangsnut des Befestigungsabschnitts ausgebildet. Dies ermöglicht ein einfaches Positionieren der Ansteuerelemente, da der Eingriffsabschnitt in die Umfangsnut eingreift, um dann an der eingestellten Position mittels der Spannmittel befestigt zu werden.

Die Ansteuerelemente können zwischen den Segmenten mit der Umfangsnut eingesetzt und in die Umfangsnut geschoben werden. Das ermöglicht ein Austauschen einzelner Ansteuerungselemente der Ansteuerungsvorrichtung.

Des Weiteren ist es bei der Ansteuerungsvorrichtung vorteilhaft, wenn das Spannmittel zumindest eine Schraube oder zumindest eine Klemme oder ein Spannfutter oder eine Zwinge zum Fixieren der Position des mindestens einen Ansteuerelementes an dem Befestigungsabschnitt ist.

Diese Arten der Spannmittel ermöglichen eine lösbare Verbindung zwischen den Ansteuerelementen an den Befestigungselementen, das heißt, sie lassen sich einfach befestigen und lösen und können wiederverwendet werden.

Ein dritter Aspekt der Erfindung ist eine Transportvorrichtung zum Transportieren von Behältern. Diese Transportvorrichtung umfasst
- mehrere Greifeinrichtungen zum Greifen, Halten und Führen von flaschenartigen Behältern, wobei die Greifeinrichtungen Betätigungselemente der Greifarme aufweisen,
- eine Trägerplatte zum Aufnehmen der Greifeinrichtungen,
- eine Antriebswelle zum Drehen der Trägerplatte und
- eine Höhenverstellvorrichtung, wobei die Höhenverstellvorrichtung durch die Trägerplatte durchgeführt und mit dieser verbunden ist, und
- eine Ansteuerungsvorrichtung mit mindestens einem Ansteuerelement,
wobei die Ansteuerungsvorrichtung so an der Transportvorrichtung angeordnet ist, dass das mindestens eine Ansteuerelement die Betätigungselemente der Greifeinrichtungen betätigt.

Diese Transportvorrichtung ermöglicht ein Anpassen der Höhe der Trägerplatte und damit einhergehend ein Anpassen an die verschiedenen Behälter und deren Größe.

Dabei ist es besonders vorteilhaft, wenn die Höhenverstellvorrichtung nach dem ersten Aspekt der Erfindung ausgebildet ist. Dies ermöglicht ein präzises Verstellen der Höhe der Transportvorrichtung. Gleichzeitig ist eine Höhenverstellvorrichtung gemäß dem ersten Aspekt der Erfindung einfach und wartungsarm aufgebaut.

Weiterhin ist es besonders vorteilhaft bei der Transportvorrichtung, wenn die Ansteuerungsvorrichtung gemäß dem zweiten Aspekt der Erfindung ausgebildet ist. Diese vereinfachte Ansteuerungsvorrichtung ermöglicht ein Anpassen der Ansteuerelemente an die jeweiligen Betätigungselemente der Transportvorrichtung und ermöglicht ein einfaches Austauschen und Warten.

Dabei ist es denkbar, dass die Greifarme der Greifeinrichtung einen Grundkörper und Greifabschnitte aufweisen, wobei die Greifabschnitte um eine zur Höhenachse der Höhenverstellvorrichtung parallele Schwenkachse schwenkbar gelagert sind. Die ermöglicht das Öffnen und Schließen der Greifarme mittels der Ansteuerungsvorrichtung.

Um das Schließen der Greifabschnitte bzw. Greifarme zu verbessern ist es denkbar, dass ein Rückstellmittel vorgesehen ist. Dieses Rückstellmittel kann dabei ein erstes Magnetpaar sein, dessen Magnete sich gegenseitig anziehen. Dabei kann ein erster Magnet in einem ersten Greifabschnitt und ein zweiter Magnet in dem zweiten Greifabschnitt vorgesehen sein.

Denkbar ist auch, dass die Greifabschnitte in Abhängigkeit der Behälter um eine zur Höhenachse der Höhenverstellvorrichtung senkrechte Schwenkachse, welche mittig durch den jeweiligen Greifabschnitt verläuft, schwenkbar bzw. rotierbar gelagert sind. Dies ermöglicht ein festes zugreifen beim Behältertransport. Um nach einer Rotation der Greifabschnitte diese wieder in die senkrechte Ausgangsposition zu bringen, ist es möglich zusätzlich oder alternativ mindestens ein zweites Magnetpaar einzusetzen. Dabei ist jeweils ein erster Magnet in dem Grundkörper und jeweils ein zweiter Magnet in dem Greifabschnitt vorgesehen.

Bei der Transportvorrichtung ist es besonders vorteilhaft, wenn die Trägerplatte mit einem Führungsgehäuse der Höhenverstellvorrichtung verbunden ist. Diese Verbindung lässt in vorteilhafterweise durch Anschrauben der Trägerplatte an das Führungsgehäuse erzeuge. Durch die lösbare aber kraftschlüssige Verbindung wird sichergestellt, dass bei einer Höhenverstellung das verschobene Führungsgehäuse die Trägerplatte mitnimmt.

Weitere Ausführungsformen ergeben sich aus den Unteransprüchen.

Nachfolgend wird die Erfindung anhand eines Ausführungsbeispiels beschrieben, das anhand der Abbildungen näher erläutert wird. Hierbei zeigen:
- Fig. 1: eine schematische Darstellung einer Höhenverstellvorrichtung mit einem als Elektromotor ausgebildeten Antriebselement;
- Fig. 2: eine schematische Darstellung eines als Handkurbel ausgebildeten Antriebselements in einem Ausschnitt A;
- Fig. 3: eine Schnittdarstellung eines Ausschnitts B einer Ansteuerungsvorrich-tung;
- Fig. 4: eine isometrische Darstellung einer Transportvorrichtung mit einer Höhenverstellvorrichtung gemäß Fig. 1 und einer Ansteuervorrichtung gemäß Fig. 3, ohne Greifeinrichtungen;
- Fig. 5: eine isometrische Darstellung einer Transportvorrichtung mit einer Höhenverstellvorrichtung gemäß Fig. 1 und einer Ansteuervorrichtung gemäß Fig. 3, sowie Greifeinrichtungen.

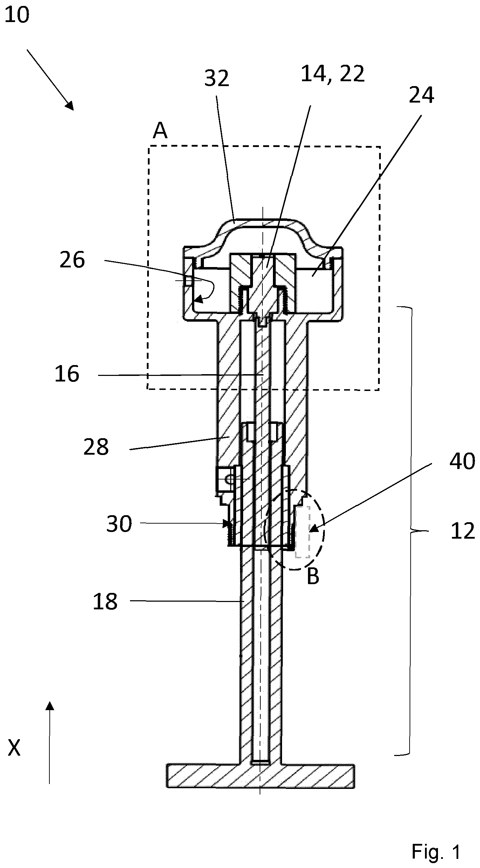

In der Fig. 1 ist eine Höhenverstellvorrichtung 10 zum Höhenverstellen einer Greif- und Transportvorrichtung 60 zum Greifen, Halten, Führen und Transportieren von insbesondere flaschenartigen Behältern, dargestellt.

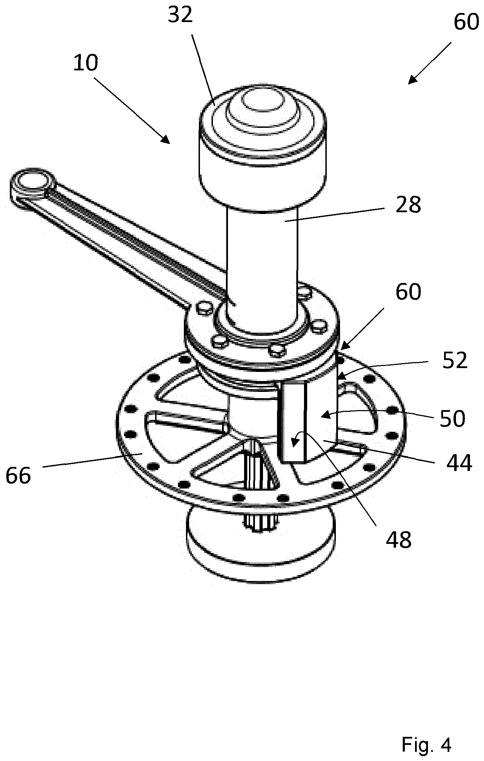

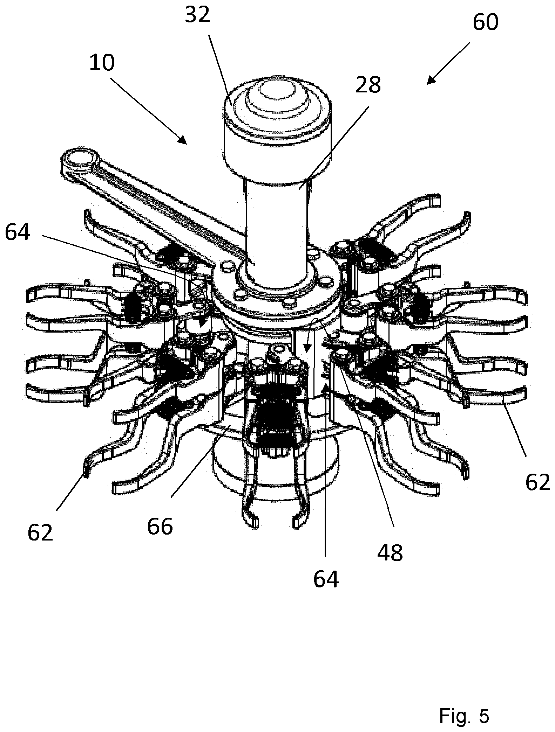

Die Höhenverstellvorrichtung 10 weist einen Linearantrieb 12 auf, der ausgelegt ist, die Greif- und Transportvorrichtung 60 in einer linearen Bewegung entlang einer Höhenachse X der Transportvorrichtung 60 zu verstellen. Zusätzlich ist der Linearantrieb 12 ausgelegt, durch eine Trägerplatte 66 der Transportvorrichtung 60 (siehe Fig. 4 und 5) durchführbar und verbindbar zu sein. Des Weiteren sieht die Höhenverstellvorrichtung 10 ein Antriebselement 14 vor, wobei das Antriebselement 14 mit dem Linearantrieb 12 wirkverbunden ist.

Der Linearantrieb 12 weist eine Spindel 16 für einen Kugelgewindetrieb auf. Die Spindel 16 weist dabei Rillen, ähnlich einem Gewindegang, auf, in welchem die Kugeln rollen. Hier wurde sich für diesen Trieb entschieden, da die Präzision und die geringe Reibung im Vordergrund stehen. Wenn der Linearantrieb 12 eine hohe Tragfähigkeit benötigt, dann ist es vorteilhafter eine Spindel 16, die für einen Rollengewindetrieb oder ein Planetenrollengewindetrieb ausgelegt ist, einzusetzen.

Zum Schutz vor Umwelteinflüssen und um Verschmutzung des Linearantriebs 12 so gering wie möglich zu halten ist ein Schubrohr 18 vorgesehen. Gleichzeitig führt das Schubrohr 18 zur Stabilisierung des Linearantriebs 12. Das Schubrohr 18 weist eine Struktur auf, die komplementär zu den Rillen der Spindel 16 ist, so dass diese zum Ausführen der Bewegung ineinandergreifen können. Während der Verstellung der Höhe läuft die Spindel 16 in dem Schubrohr 18.

In dem hier dargestellten Ausführungsbeispiel ist eine sich drehende Spindel 16 vorgesehen, das heißt, dass das Antriebselement 14 die Spindel 16 direkt antreibt und die Spindel 16 sich aus dem Schubrohr herausbewegt.

Zum weiteren Schutz der Höhenverstellvorrichtung 10 ist ein Führungsgehäuse 28 vorgesehen. Das Führungsgehäuse 28 umgibt den Linearantrieb 12 zumindest abschnittsweise und ist mit dem der Linearantrieb 12 verbunden.

Um die Zugänglichkeit des Antriebselementes zu vereinfachen, ist in den hier dargestellten Ausführungen gemäß Fig. 1, 4 und 5 eine Aufnahme 26 für das Antriebselement 14 an einem oberen Ende des Linearantriebs 12 vorgesehen. Diese Aufnahme 26 ist dabei in das Führungsgehäuse 28 integriert.

Allerdings kann die Aufnahme 26 an einem unteren Ende des Linearantriebs 12 und dabei vor allem an dem Schubrohr 18 des Linearantriebs 12, angeordnet sein. Dies ist eine vorteilhafte Anordnung für den Fall, dass die Spindel 16 eine nicht drehende Spindel 16 ist.

Zum Erzeugen der Bewegung und dem Übertragen der Richtung der gewünschten Bewegung auf den Linearantrieb 12 ist das Antriebselement 14 in Fig. 1 ein Elektromotor 22 mit Akkumulator 24. Dabei ist der Elektromotor 22 in der Aufnahme 26 angeordnet und direkt auf dem Ende der Spindel 16 montiert. Der dazugehörige Akkumulator 24 ist zusätzlich in der Aufnahme 26 angeordnet. Zum Entnehmen und Wiedereinsetzen oder Austauschen des Akkumulators 24 ist an der Aufnahme 26 ein Deckel 32 vorgesehen. Dieser dient zum Verschließen der Aufnahme 26 und somit dem Schutz des Elektromotors 22 und des Linearantriebs 12.

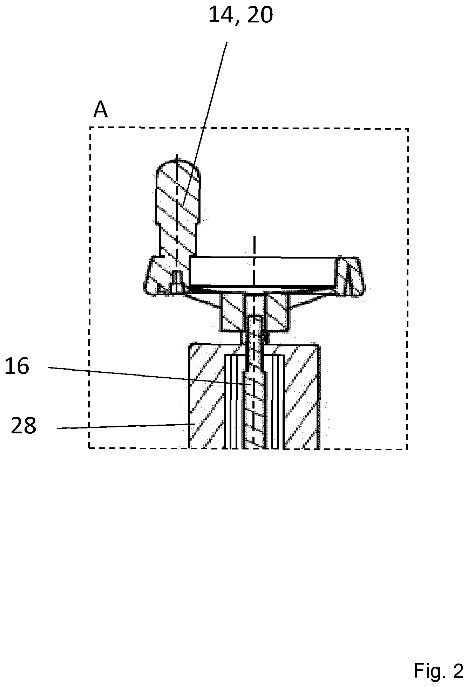

Eine weitere Möglichkeit, ist ein manuelles Antriebselement 14, die Handkurbel 20, wie sie in dem Ausschnitt A des Antriebselementes der Fig. 2 dargestellt ist. Diese benötigt keine zusätzliche Energie um die Höhe zu verstellen.

Um in einer Transportvorrichtung die Aufnahme der Behälter zu gewährleisten sind zumeist Ansteuerungsvorrichtungen 40 vorgesehen. Diese sind in zum Höhenverstellen mit der Höhenverstellvorrichtung 10 verbunden. Dabei kann der Linearantrieb 12 eine Ansteuerungsvorrichtung - Aufnahme 30 für eine Ansteuerungsvorrichtung 40 aufweisen. In den hier gezeigten Ausführungen weist das den Linearantrieb 12 umgebende Führungsgehäuse 28 diese Ansteuerungsvorrichtung - Aufnahme 30 auf.

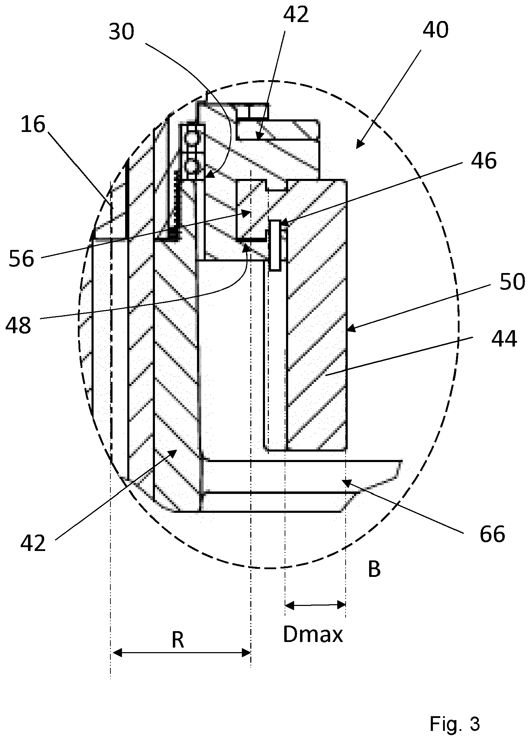

In Fig. 3 ist ein Querschnitt einer Ansteuerungsvorrichtung 40 zum Steuern von Betätigungselementen 64 von einer Greifeinrichtung einer Transportvorrichtung 60 zum Transportieren von flaschenartigen Behältern dargestellt.

Die dargestellte Ansteuerungsvorrichtung 40 sieht einen Befestigungsabschnitt 42 und mindestens ein Ansteuerelement 44 vor. Dabei ist der Befestigungsabschnitt 42 ausgelegt, über die Ansteuerungsvorrichtung - Aufnahme 30 an der Höhenverstellvorrichtung 10 gemäß Fig.1 oder 2 befestigt zu werden. Ferner ist der Befestigungsabschnitt 42 ausgelegt, wie in Fig. 4 und 5, mit einer Trägerplatte 66 der Transportvorrichtung 60 verbindbar zu sein bzw. verbunden zu sein. Wohingegen das Ansteuerelement 44 mittels eines Spannmittels 46 fest und verdrehsicher an dem Befestigungsabschnitt 42 positionierbar ist.

Zur besseren Befestigung des Ansteuerelements weist der Befestigungsabschnitt 42 eine segmentierte Umfangsnut 48 in Form einer T-Nut auf. Der Eingriffsabschnitt 56 des mindestens einen Ansteuerelements 44 einen Eingriffsabschnitt 56 aufweist, wobei der Eingriffsabschnitt 56 der komplementären Form der Umfangsnut 48 entspricht. Der Eingriffsabschnitt 56 kann in Umfangsrichtung innerhalb der Umfangsnut 48 verschoben werden und ist somit variabel positionierbar.

Um die Position des Ansteuerelements 44 innerhalb der Umfangsnut 48 des Befestigungsabschnitts 42 zu fixieren, werden in den gezeigten Ausführungsbeispielen Schrauben als das Spannmittel 46 verwendet.

Die Ansteuerelemente 44 und deren Eingriffsabschnitt 56 weisen einen Radius R auf, der dem Radius R der Umfangsnut 54 entspricht. Sie weisen an der dem Eingriffsabschnitt 56 gegenüberliegenden Seite einen Einlaufbereich 48, einen Ansteuerbereich 50 und einen Auslaufbereich 52 auf (siehe Fig. 4). Der Ansteuerbereich 50 befindet sich zwischen dem Einlaufbereich 48 und dem Auslaufbereich 52 und weist die maximale Dicke Dmax des Ansteuerelements 44 auf. Der Einlaufbereich 48 und der Auslaufbereich 52 sind schräg geformt. Während des Ansteuervorgangs berühren die Betätigungselemente 64 der Greifeinrichtung der Transportvorrichtung 60 zunächst den Einlaufbereich 48. Dies führt zu einer Impulsaufnahme. Im Ansteuerbereich 50 wird dann genügend Kraft auf die Betätigungselemente 64 ausgeübt, um die Greifeinrichtungen 62 zu öffnen. Im Auslaufbereich 52 nimmt die auf die Betätigungselemente 64 wirkende Kraft wieder ab und die Greifeinrichtung 62 schließt sich erneut.

In den Fig. 4 und 5 ist eine Transportvorrichtung 60 zum Transportieren von Behältern dargestellt. Die Transportvorrichtung 60 umfasst mehrere Greifeinrichtungen 62 zum Greifen, Halten und Führen von flaschenartigen Behältern, wobei die Greifeinrichtungen 62 Betätigungselemente 64 der Greifarme aufweisen, siehe Fig. 5, eine Trägerplatte 66 zum Aufnehmen der Greifeinrichtungen 62, eine Antriebswelle 68 zum Drehen der Trägerplatte 66 und sowie eine Höhenverstellvorrichtung 10 gemäß der Fig. 1 und eine Ansteuerungsvorrichtung 40 mit mindestens einem Ansteuerelement 44 gemäß der Fig. 3.

Wie in den Fig. 4 und 5 zu erkennen, ist die Höhenverstellvorrichtung 10 durch eine mittig liegende Öffnung der Trägerplatte 66 durchgeführt und über das Führungsgehäuse 28 mit der Trägerplatte 66 verbunden. Zusätzlich ist die Ansteuerungsvorrichtung 40 so an der Transportvorrichtung 60 angeordnet, dass das mindestens eine Ansteuerelement 44 die Betätigungselemente 64 der Greifeinrichtungen 62 betätigt.

### Bezugszeichen

- 10: Höhenverstellvorrichtung
- 12: Linearantrieb
- 14: Antriebselement
- 16: Spindel
- 18: Schubrohr
- 20: Handkurbel
- 22: Elektromotor
- 24: Akkumulator
- 26: Aufnahme
- 28: Führungsgehäuse
- 30: Ansteuerungsvorrichtung-Aufnahme
- 32: Deckel
- 40: Ansteuerungsvorrichtung
- 42: Befestigungsabschnitt
- 44: Ansteuerelement
- 46: Spannmittel
- 48: Einlaufbereich
- 50: Ansteuerbereich
- 52: Auslaufbereich
- 54: Umfangsnut
- 56: Eingriffsabschnitt
- 60: Transportvorrichtung
- 62: Greifeinrichtungen
- 64: Betätigungselemente
- 66: Trägerplatte
- 68: Antriebswelle

- X: Höhenachse
- Dmax: maximale Dicke
- R: Radius

## Patentansprüche

1. Höhenverstellvorrichtung (10) zum Höhenverstellen einer Greif- und Transportvorrichtung (60) zum Greifen, Halten, Führen und Transportieren von insbesondere flaschenartigen Behältern, das Folgende aufweisend:
- einen Linearantrieb (12), wobei der Linearantrieb (12) ausgelegt ist, die Greif- und Transportvorrichtung (60) in einer linearen Bewegung entlang einer Höhenachse der Transportvorrichtung (60) zu verstellen, und wobei der Linearantrieb (12) ausgelegt ist, durch eine Trägerplatte (66) der Transportvorrichtung (60) durchführbar und verbindbar zu sein, und
- ein Antriebselement (14), wobei das Antriebselement (14) mit dem Linearantrieb (12) wirkverbunden ist.

2. Höhenverstellvorrichtung (10) nach Anspruch 1,
**dadurch gekennzeichnet, dass**
der Linearantrieb (12) eine Spindel (16) aufweist, wobei die Spindel (16) für einen Kugelgewindetrieb oder Rollengewindetrieb oder ein Planetenrollengewindetrieb ausgelegt ist.

3. Höhenverstellvorrichtung (10) nach Anspruch 2,
**dadurch gekennzeichnet, dass**
der Linearantrieb (12) ein Schubrohr (18) aufweist, wobei das Schubrohr (18) und die Spindel (16) zur Ausführung der Bewegung ineinandergreifen.

4. Höhenverstellvorrichtung (10) nach Anspruch 2 oder 3,
**dadurch gekennzeichnet, dass**
die Spindel (16) eine drehende oder nicht drehende Spindel (16) ist.

5. Höhenverstellvorrichtung (10) nach einem der vorhergehenden Ansprüche,
**dadurch gekennzeichnet, dass**
das Antriebselement (14) eine Handkurbel (20) oder ein Elektromotor (22), insbesondere ein Elektromotor (22) mit Akkumulator (24), ist.

6. Höhenverstellvorrichtung (10) nach einem der vorhergehenden Ansprüche,
**dadurch gekennzeichnet, dass**
eine Aufnahme (26) für das Antriebselement (14) vorgesehen ist, wobei die Aufnahme (26) an einem oberen Ende des Linearantriebs (12) vorgesehen ist oder wobei die Aufnahme (26) an einem unteren Ende des Linearantriebs (12), insbesondere des Schubrohrs (18) des Linearantriebs (12), angeordnet ist.

7. Höhenverstellvorrichtung (10) nach einem der vorhergehenden Ansprüche,
**dadurch gekennzeichnet, dass**
ein Führungsgehäuse (28) vorgesehen ist, wobei das Führungsgehäuse (28) den Linearantrieb (12) zumindest abschnittsweise umgibt und, wobei das Führungsgehäuse (28) und der Linearantrieb (12), insbesondere linearverstellbar, miteinander verbunden sind.

8. Höhenverstellvorrichtung (10) nach einem der vorhergehenden Ansprüche,
**dadurch gekennzeichnet, dass**
der Linearantrieb (12), insbesondere das den Linearantrieb (12) umgebende Führungsgehäuse (28), eine Ansteuerungsvorrichtung (40)-Aufnahme (30) für eine Ansteuerungsvorrichtung (40), insbesondere einer Ansteuerungsvorrichtung (40) gemäß einem der Ansprüche 9 bis 11, zum Steuern von Betätigungselementen (64) von einer Greifeinrichtung einer Transportvorrichtung (60) zum Transportieren von flaschenartigen Behältern aufweist.

9. Ansteuerungsvorrichtung (40) zum Steuern von Betätigungselementen (64) von einer Greifeinrichtung einer Transportvorrichtung (60) zum Transportieren von flaschenartigen Behältern, aufweisend
- einen Befestigungsabschnitt (42), wobei der Befestigungsabschnitt (42) ausgelegt ist, an einer Höhenverstellvorrichtung (10), insbesondere einer Höhenverstellvorrichtung (10) gemäß einem der vorhergehenden Ansprüche, befestigt zu werden, und wobei der Befestigungsabschnitt (42) ausgelegt ist, mit einer Trägerplatte (66) der Transportvorrichtung (60) verbindbar zu sein und
- mindestens ein Ansteuerelement (44),
wobei das Ansteuerelement (44) mittels eines Spannmittels (46) fest und verdrehsicher an dem Befestigungsabschnitt (42) positionierbar ist.

10. Ansteuerungsvorrichtung (40) nach Anspruch 9,
**dadurch gekennzeichnet, dass**
der Befestigungsabschnitt (42) eine segmentierte Umfangsnut (48), insbesondere in Form einer T-Nut, aufweist, und
dass das mindestens eine Ansteuerelement (44) einen Eingriffsabschnitt (56) aufweist, wobei der Eingriffsabschnitt (56) der komplementären Form der Umfangsnut (48) entspricht und in der segmentierten Umfangsnut (48) in deren Umfangsrichtung variabel positionierbar ist.

11. Ansteuerungsvorrichtung (40) nach Anspruch 9 oder 10,
**dadurch gekennzeichnet, dass**
das Spannmittel (46) zumindest eine Schraube oder zumindest eine Klemme oder ein Spannfutter oder ein Zwinge zum Fixieren der Position des mindestens einen Ansteuerelements (44) an dem Befestigungsabschnitt (42) ist.

12. Transportvorrichtung (60) zum Transportieren von Behältern, umfassend
- mehrere Greifeinrichtungen (62) zum Greifen, Halten und Führen von flaschenartigen Behältern, wobei die Greifeinrichtungen (62) Betätigungselemente (64) der Greifarme aufweisen,
- eine Trägerplatte (66) zum Aufnehmen der Greifeinrichtungen (62),
- eine Antriebswelle (68) zum Drehen der Trägerplatte (66) und
- eine Höhenverstellvorrichtung (10), insbesondere einer Höhenverstellvorrichtung (10) nach einem der Ansprüche 1 bis 8, wobei die Höhenverstellvorrichtung (10) durch die Trägerplatte (66) durchgeführt und mit dieser verbunden ist, und
- eine Ansteuerungsvorrichtung (40) mit mindestens einem Ansteuerelement (44), insbesondere einer Ansteuerungsvorrichtung (40) gemäß einem der Ansprüche 9 bis 11, wobei die Ansteuerungsvorrichtung (40) so an der Transportvorrichtung (60) angeordnet ist, dass das mindestens eine Ansteuerelement (44) die Betätigungselemente (64) der Greifeinrichtungen (62) betätigt.

13. Transportvorrichtung (60) nach Anspruch 12,
**dadurch gekennzeichnet, dass**
die Trägerplatte (66) mit einem Führungsgehäuse (28) der Höhenverstellvorrichtung (10) verbunden, insbesondere angeschraubt, ist.

## Geänderte Patentansprüche

### Geänderte Patentansprüche gemäss Regel 137(2) EPÜ.

1. Transportvorrichtung (60) zum Transportieren von Behältern, umfassend
- mehrere Greifeinrichtungen (62) zum Greifen, Halten und Führen von flaschenartigen Behältern, wobei die Greifeinrichtungen (62) Greifarme sowie Betätigungselemente (64) der Greifarme aufweisen,
- eine Trägerplatte (66) zum Aufnehmen der Greifeinrichtungen (62),
- eine Antriebswelle (68) zum Drehen der Trägerplatte (66) und
- eine Höhenverstellvorrichtung (10) zum Höhenverstellen der Greif- und Transportvorrichtung (60), das Folgende aufweisend:
- einen Linearantrieb (12), wobei der Linearantrieb (12) ausgelegt ist, die Greif- und Transportvorrichtung (60) in einer linearen Bewegung entlang einer Höhenachse der Transportvorrichtung (60) zu verstellen, und wobei der Linearantrieb (12) durch die Trägerplatte (66) durchgeführt und mit dieser verbunden ist,
- ein Antriebselement (14), wobei das Antriebselement (14) mit dem Linearantrieb (12) wirkverbunden ist,
und
- eine Ansteuerungsvorrichtung (40) zum Steuern von Betätigungselementen (64) der Greifeinrichtungen (62) der Transportvorrichtung (60) zum Transportieren von flaschenartigen Behältern, aufweisend
- einen Befestigungsabschnitt (42), wobei der Befestigungsabschnitt (42) an der Höhenverstellvorrichtung (10) befestigt ist, und wobei der Befestigungsabschnitt (42) mit einer Trägerplatte (66) der Transportvorrichtung (60) verbunden ist und
- mindestens ein Ansteuerelement (44), wobei das Ansteuerelement (44) mittels eines Spannmittels (46) fest und verdrehsicher an dem Befestigungsabschnitt (42) positionierbar ist,
wobei die Ansteuerungsvorrichtung (40) so an der Transportvorrichtung (60) angeordnet ist, dass das mindestens eine Ansteuerelement (44) die Betätigungselemente (64) der Greifeinrichtungen (62) betätigt.

2. Transportvorrichtung (60) nach Anspruch 1,
**dadurch gekennzeichnet, dass**
der Linearantrieb (12) der Höhenverstellvorrichtung (10) eine Spindel (16) aufweist, wobei die Spindel (16) für einen Kugelgewindetrieb oder Rollengewindetrieb oder ein Planetenrollengewindetrieb ausgelegt ist.

3. Transportvorrichtung (60) nach Anspruch 2,
**dadurch gekennzeichnet, dass**
der Linearantrieb (12) der Höhenverstellvorrichtung (10) ein Schubrohr (18) aufweist, wobei das Schubrohr (18) und die Spindel (16) zur Ausführung der Bewegung ineinandergreifen.

4. Transportvorrichtung (60) nach Anspruch 2 oder 3,
**dadurch gekennzeichnet, dass**
die Spindel (16) des Linearantriebs (12) der Höhenverstellvorrichtung (10) eine drehende oder nicht drehende Spindel (16) ist.

5. Transportvorrichtung (60) nach einem der vorhergehenden Ansprüche, **dadurch gekennzeichnet, dass**
das Antriebselement (14) der Höhenverstellvorrichtung (10) eine Handkurbel (20) oder ein Elektromotor (22), insbesondere ein Elektromotor (22) mit Akkumulator (24), ist.

6. Transportvorrichtung (60) nach einem der vorhergehenden Ansprüche, **dadurch gekennzeichnet, dass**
bei der Höhenverstellvorrichtung (10) eine Aufnahme (26) für das Antriebselement (14) vorgesehen ist, wobei die Aufnahme (26) an einem oberen Ende des Linearantriebs (12) vorgesehen ist oder wobei die Aufnahme (26) an einem unteren Ende des Linearantriebs (12), insbesondere des Schubrohrs (18) des Linearantriebs (12), angeordnet ist

7. Transportvorrichtung (60) nach einem der vorhergehenden Ansprüche, **dadurch gekennzeichnet, dass**
bei der Höhenverstellvorrichtung (10) ein Führungsgehäuse (28) vorgesehen ist, wobei das Führungsgehäuse (28) den Linearantrieb (12) zumindest abschnittsweise umgibt und, wobei das Führungsgehäuse (28) und der Linearantrieb (12), insbesondere linearverstellbar, miteinander verbunden sind.

8. Transportvorrichtung (60) nach einem der vorhergehenden Ansprüche, **dadurch gekennzeichnet, dass**
die Trägerplatte (66) mit dem Führungsgehäuse (28) der Höhenverstellvorrichtung (10) verbunden, insbesondere angeschraubt, ist.

9. Transportvorrichtung (60) nach einem der vorhergehenden Ansprüche, **dadurch gekennzeichnet, dass**
der Linearantrieb (12) der Höhenverstellvorrichtung (10), insbesondere das den Linearantrieb (12) umgebende Führungsgehäuse (28), eine Ansteuerungsvorrichtung-Aufnahme (30) für die Ansteuerungsvorrichtung (40) aufweist.

10. Transportvorrichtung (60) nach einem der vorhergehenden Ansprüche, **dadurch gekennzeichnet, dass**
der Befestigungsabschnitt (42) der Ansteuerungsvorrichtung (40) eine segmentierte Umfangsnut (48), insbesondere in Form einer T-Nut, aufweist, und
dass das mindestens eine Ansteuerelement (44) der Ansteuerungsvorrichtung (40) einen Eingriffsabschnitt (56) aufweist, wobei der Eingriffsabschnitt (56) der komplementären Form der Umfangsnut (48) entspricht und in der segmentierten Umfangsnut (48) in deren Umfangsrichtung variabel positionierbar ist.

11. Transportvorrichtung (60) nach einem der vorhergehenden Ansprüche, **dadurch gekennzeichnet, dass**
das Spannmittel (46) der Ansteuerungsvorrichtung (40) zumindest eine Schraube oder zumindest eine Klemme oder ein Spannfutter oder ein Zwinge zum Fixieren der Position des mindestens einen Ansteuerelements (44) an dem Befestigungsabschnitt (42) ist.
